Europäisches Patentamt

European Patent Office

Office européen des brevets

(19)

(11) **EP 0 657 722 B1**

(12) **EUROPEAN PATENT SPECIFICATION**

(45) Date of publication and mention
of the grant of the patent:
**02.05.2002 Bulletin 2002/18**

(51) Int Cl.7: **G01F 1/68**

(21) Application number: **94308616.5**

(22) Date of filing: **22.11.1994**

(54) **A hot wire type air flowmeter**

Hitzdraht Luftdurchflussmesser

Débitmètre d'air à fil chaud

(84) Designated Contracting States:
**DE GB IT**

(30) Priority: **07.12.1993 JP 30621693**

(43) Date of publication of application:
**14.06.1995 Bulletin 1995/24**

(73) Proprietors:
- **Hitachi, Ltd.
  Chiyoda-ku, Tokyo 101 (JP)**
- **Hitachi Car Engineering Co., Ltd.
  Hitachinaka, Ibaraki (JP)**

(72) Inventors:
- **Itsuji, Takayuki
  Hitachinaka-shi, Ibaraki 312 (JP)**
- **Akamatsu, Masuo
  Hitachinaka-shi, Ibaraki 312 (JP)**
- **Yoneda, Hiroshi
  Hitachinaka-shi, Ibaraki 312 (JP)**

(74) Representative: **Beetz & Partner Patentanwälte
Steinsdorfstrasse 10
80538 München (DE)**

(56) References cited:
**EP-A- 0 522 496          EP-A- 0 542 490
DE-A- 4 143 147          JP-A- 57 184 923
US-A- 5 141 021          US-A- 5 237 868**

- **PATENT ABSTRACTS OF JAPAN vol. 005 no.
  185 (P-091), 25 November 1981 & JP-A-56 112610
  (OVAL ENG CO LTD)**

**Description**

BACKGROUND OF THE INVENTION

Field of the Invention:

The present invention relates to an air flowmeter having a hot wire type resistor for detecting air flow rates to control a vehicle engine.

Description of the Related Art:

In the conventional equipment, as described by Japanese Patent Application Laid-Open 184923/1982, the output span of an air flowmeter is set by adjusting resistors connected to the current detecting terminal of a hot wire and the zero point is adjusted by changing the standard input voltage of a differential amplifier.

It is difficult in the conventional techniques to adjust the output of a flowmeter since the zero adjustment of an air flowmeter output changes also the output span due to temperature differences in every hot wire product and convergence operations by alternatively adjusting the zero point and the output span are needed to fix the zero point and the output span to each target value. That is, the conventional techniques have the problem that the zero adjustment and the output span adjustment can not be made independently without mutual interferences. Further, the conventional techniques cannot give enough compensations to temperature changes since the output of an air flowmeter cannot be compensated over the whole range of flow rates and such output temperature compensation is conventionally possible at one point only of flow rate.

US 5,237,868 discloses a hot wire type air flowmeter having a drive circuit and an output adjusting circuit comprising a subtractor having an input terminal applied with an output of the drive circuit, another input terminal applied with a constant voltage reference and an output supplied to a non-inverting amplifier. The zero adjustment and the output span adjustment are not independent and mutually interfere.

A further hot wire type air flowmeter is disclosed in JP-A-57184923 disclosing a subtractor to which two variable signals are applied.

SUMMARY OF THE INVENTION

The present invention has been achieved in consideration of the above-described problems, and is aimed at providing an improved hot wire type air flowmeter.

According to this invention there is provided a hot wire type air flowmeter as claimed in claim 1 herein.

The current flowing in the hot wire type resistor is converted to a voltage signal by a standard resistor. The output span of the voltage signal is adjusted so as to take the preset gradient by a non-inverting amplifier. A voltage follower is connected between a voltage reference source and a subtracter so as to set the zero point to the preset voltage.

BRIEF DESCRIPTION OF THE DRAWINGS

Fig. 1 shows an embodiment of the present invention.
Fig. 2 shows a sectional view of an air flowmeter by the embodiment of the present invention.
Fig. 3 shows a conventional air flowmeter.
Fig. 4 shows a flow chart of an adjustment method in the present invention.
Fig. 5 shows a circuit for an air flowmeter not forming part of the invention.
Fig. 6 shows a further embodiment of the present invention.
Fig. 7 shows yet another embodiment of the present invention.
Fig. 8 shows the relation between the heat transfer coefficient and the air flow rate.
Fig. 9 shows the relation between the error induced by temperature change and the air flow rate.
Fig.10 shows are example of an amplifier capable of compensating temperature dependency.
Fig.11 shows another example of an amplifier capable of compensating temperature dependency.
Fig.12 shows a further example of an amplifier capable of compensating temperature dependency.
Fig.13 shows yet another example of an amplifier capable of compensating temperature dependency.
Fig.14 shows a sectional view of an air flowmeter in another embodiment of the present invention.

## DETAILED DESCRIPTION OF THE EMBODIMENTS

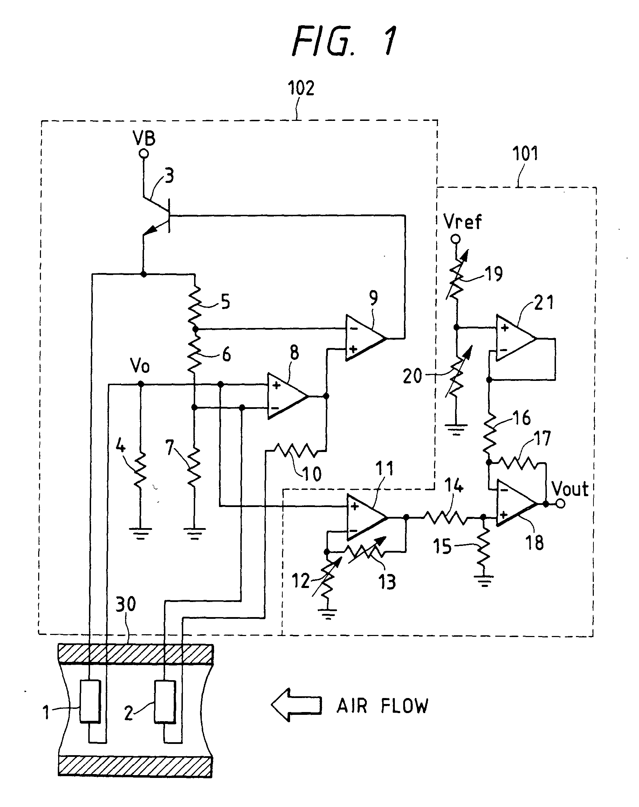

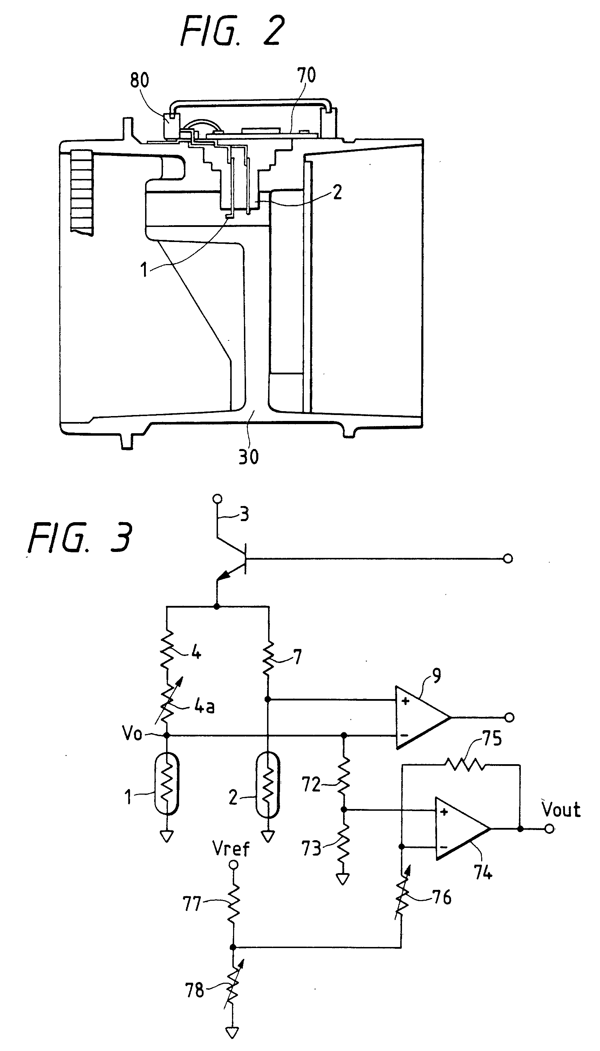

Hereinafter, details of the present invention are explained based on embodiments referring to drawings. Figure 1 is a drawing showing the embodiment of the present invention and Figure 2 is a sectional view of an air flowmeter by the present invention. By using Figs.1 and 2, the fundamental operations and constitution of the present invention are explained. A hot wire type resistor 1 and a thermistor type thermometer 2 are provided in an air path 30. A standard resistor 4 converts the current flowing in the hot wire type resistor 1 to a voltage signal and composes a bridge circuit together with resistors 5, 6 and 7. The bridge circuit controls a transistor 3 via differential amplifiers 8 and 9 by using the hot wire type resistor 1 and the thermistor type resistor 2 so that the hot wire type resistor 1 keeps the predetermined temperature corresponding to the air temperature. Therefore, the current Ih flowing in the standard resistor 4 changes in accordance with air flow rate Q as shown by Eq.1 when the temperature of the hot wire type resistor 1 is controlled as a constant. That is, the terminal voltage Vo of the standard resistor 4 changes in accordance with the air flow rate Q as shown by Eq.2. Then, the hot wire type resistor 1 is controlled by the drive circuit 102.

$$Ih^2 \cdot Rh = (A + B\sqrt{Q})\,(Th\text{-}Ta) \tag{1}$$

where,

Rh :     the resistance value of the hot wire type resistor in the heating state,

A, B :     constants of the hot wire type resistor,

Th :     the temperature of the hot wire type resistor in the heating state, and

Ta :     the air temperature.

$$Vo = R4[(A + B\sqrt{Q})\,(Th\text{-}Ta)/Rh]^{1/2} \tag{2}$$

where,

R4 :     the resistance value of the standard resistor 4.

Individual scatter of the terminal voltage Vo is induced by productive scatter of hot wire type resistors. In order to absorb the scatter, an output adjusting circuit 101 is provided. Figure 3 shows a conventional circuit for absorbing the scatter. In the conventional circuit, a resistor 4a connected to a resistor 4 for detecting the current flowing in the hot wire type resistor 1 is adjusted so that the output span is set as the predetermined value. By this method, the temperature of the hot wire type resistor 1 can not be kept constant, which makes the temperature characteristics of the flowmeter worse. The zero point is adjusted by feeding the standard voltage input into a differential amplifier 74 and changing the resistance values of resistors 76 and 78. In the circuit, the relation between the terminal voltage Vo and the output voltage Vout is expressed by Eq. 3.

$$Vout = [1 + (R77 + R75) x R75/(R77 \cdot R75 + R75 \cdot R76 + R76 \cdot R77)]$$

$$x[R73/(R73 + R72)]xVo$$

$$-[(R78 \cdot R75)/(R77 \cdot R78 + R78 \cdot R76 + R76 \cdot R77)]xVref \tag{3}$$

where,

Vref :     the standard voltage,
R72 :     the resistance value of resistor 72,
R73 :     the resistance value of resistor 73,
R74 :     the resistance value of resistor 74,
R75 :     the resistance value of resistor 75,

R76 : the resistance value of resistor 76,
R77 : the resistance value of resistor 77, and
R78 : the resistance value of resistor 78.

From Eq. 3, if the zero point is adjusted by resistors for the zero adjustment, the output span is also changed.

On the other hand, the embodiment comprises a non-inverting amplifier composed of a differential amplifier 11 and resistors 12 and 13, a voltage follower formed by a differential amplifier 21, an output thereof being fed back to a negative input of said differential amplifier 21, and the negative input of the differential amplifier 21 is input to a subtractor formed by a differential amplifier 18 and resistors 14, 15, 16 and 17. These circuits are formed on a substrate 70 and mounted in a case 80. In the embodiment, the relation between the terminal voltage Vo and the output voltage Vout is expressed by Eq.4.

$$Vout = [(R12+R13)/R12] \times Vo\text{-}[R20/(R19+R20)] \times Vref \tag{4}$$

where,

R12 : the resistance value of resistor 12,

R13 : the resistance value of resistor 13,

R19 : the resistance value of resistor 19, and

R20 : the resistance value of resistor 20.

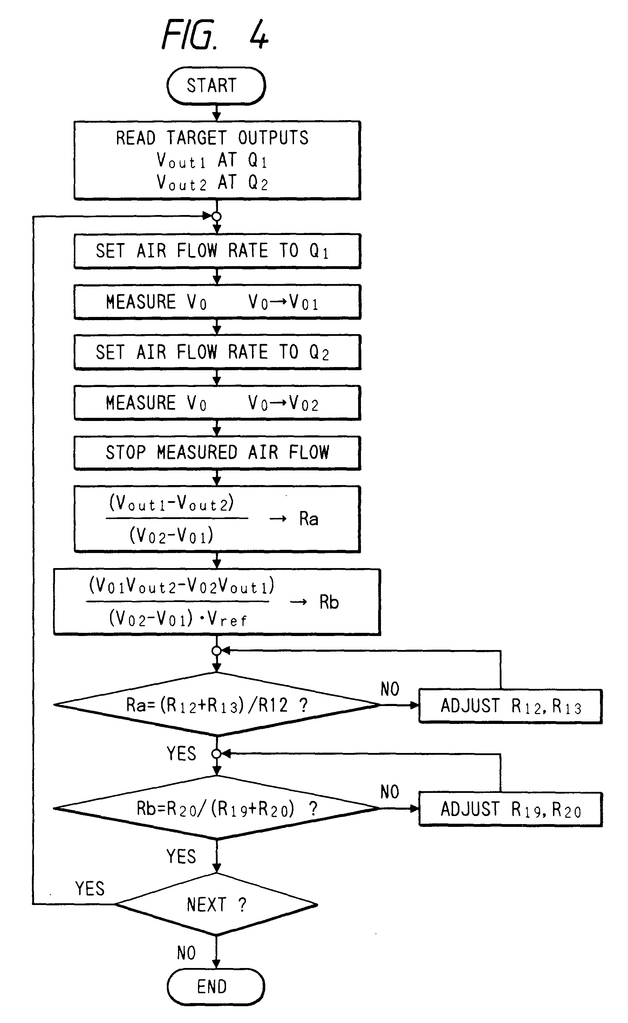

In making the adjustment using flowing air, resistors are adjusted so that the output Vout is set to the predetermined value and Vout is measured. However, this method consumes wastefully energy since air needs to be continuously flowed during the adjustment. A method in which it is not necessary to continuously flow air during the adjustment is explained by a flow chart of adjustment procedures shown by Fig.4.

At first, the terminal voltage Vo of the standard resistor at an optional flow rate Q1 is measured and the measured output value is expressed as Vo1. Secondly, the terminal voltage Vo of the standard resistor at an optional flow rate Q2 different from Q1 is measured and the measured value is marked with Vo2. Then, if the required output values at the flow rates Q1 and Q2 are set as Vo1 and Vo2, the relations between R12 and R13, and R19 and R20 are expressed by Eqs.5 and 6, respectively, from Eq.4.

$$(R12+R13)/R12 = (Vout1\text{-}Vout2)/(V02\text{-}Vo1) \tag{5}$$

$$R20/(R19+R20) = (V01 \cdot Vout2\text{-}Vo2 \cdot Vout1)/[(Vo2\text{-}V01) \times Vref] \tag{6}$$

As proven from Eqs.5 and 6, the zero and the output span adjustment can be executed, respectively, by only adjusting resistors R12, R13, R19 and R20 without continuously flowing air since the resistance values to be adjusted can be uniquely obtained by calculations if only the terminal voltages Vo1 and Vo2 at the flow rates Q1 and Q2 are measured.

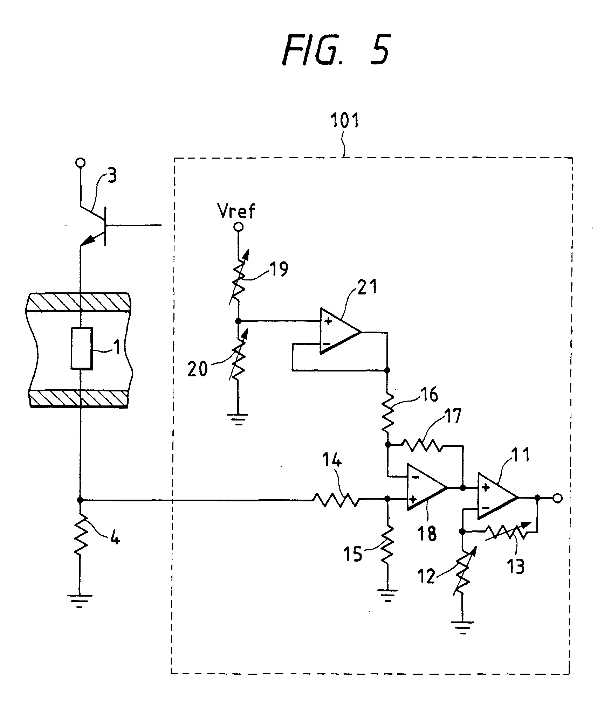

Fig. 5 shows a circuit for an air flowmeter not forming part of the invention having the non-inverting amplifier 11, the subtracter 18 and the voltage follower 21. The relation between $V_o$ and $V_{out}$ in this case is shown below.

$$Vout = [(R12+R13)/R12] \times [Vo\text{-}R20/(R19+R20) \times Vref] \tag{7}$$

As proven from Eq.7 in this case the zero and the output span adjustment can be executed by adjusting firstly the zero point and secondly the output span.

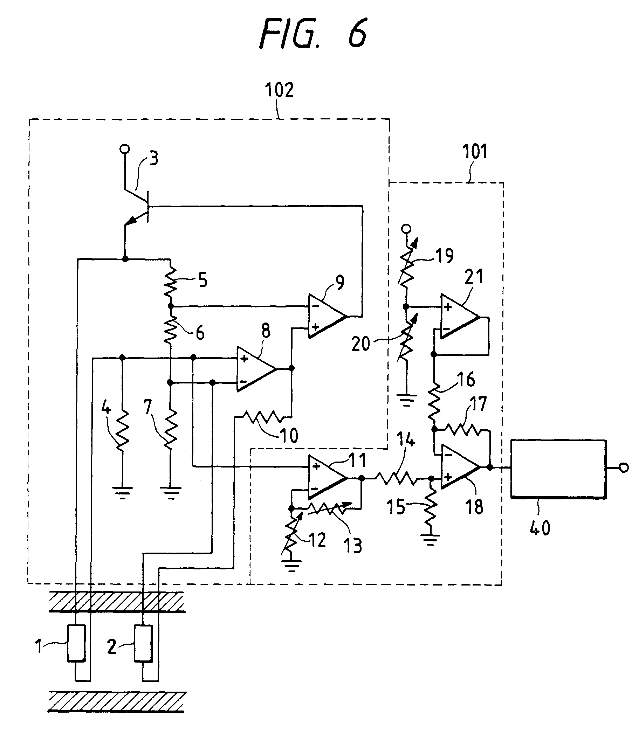

In the embodiment shown in Fig. 6, the circuits for the zero and the output span adjustment are provided before an output converting circuit. The ouotput converting circuit 40 converts the output voltage to a frequency output or a current output. By this embodiment, the zero point and the output span adjustment can be made; also adjustments for the frequency output and the current output may be made.

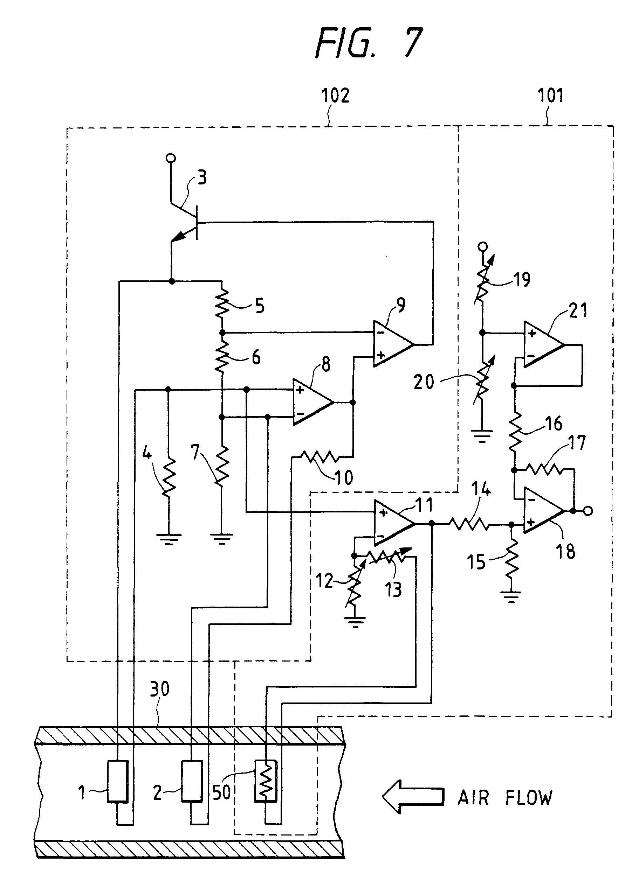

In the embodiment shown in Fig. 7, a resistor 50 having a temperature coefficient different from the other resistors is provided in the negative feedback loop of the non-inverting. amplifier and installed at a position which is exposed to suction air.

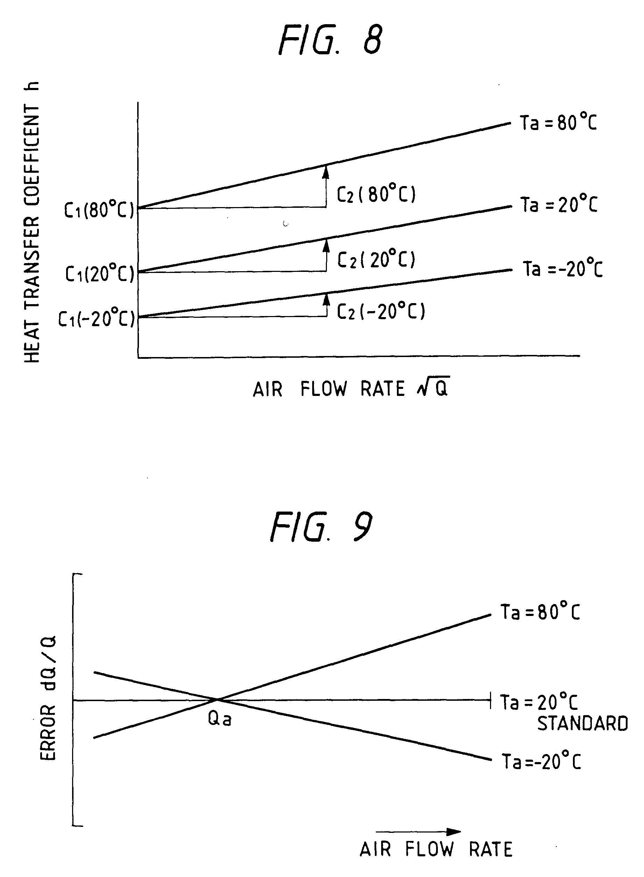

In the conventional circuit for the air flowmeter the voltage source circuit for Vref has the temperature dependency for compensating the changes of the output voltage Vout caused by the changes of suction air temperature at a flow rate Qa. However, the Vout is not directly proportional to the change of flow rate through the whole range of flow rate. The reason for this is because the heat transfer coefficient h is expressed by Eq. 8 and coefficients C1 and C2 of the equation depend on the suction air temperature as shown by Fig. 8.

$$h = C1 + C2\sqrt{Q} \tag{8}$$

where, C1, C2 : constants.

Therefore, the conventional circuit can compensate for the change of the output at only one point of the flow rate Qa and can not compensate the output change through the whole range of flow rate. Then, the error of ouptut dQ/Q changes as shown in Fig. 9. In the present invention, the output change induced by the air temperature change is compensated by providing a resistor having a temperature coefficient which compensates the heat transfer coefficient change due to the air temperature dependency, as well as the flow rate change. The changes of the zero point and the output span can be compensated by combining such a resistor and the conventional circuit.

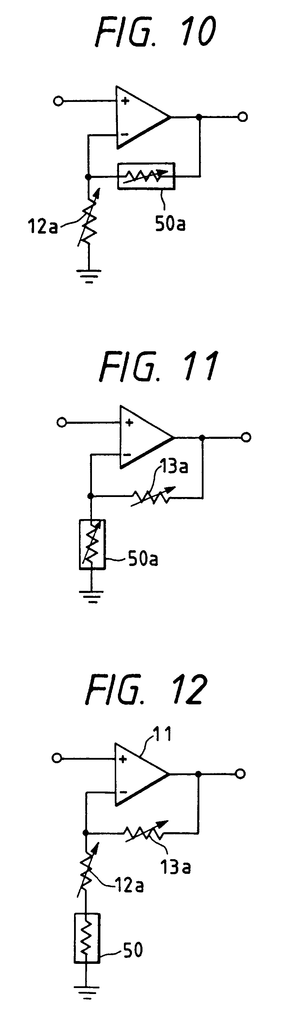

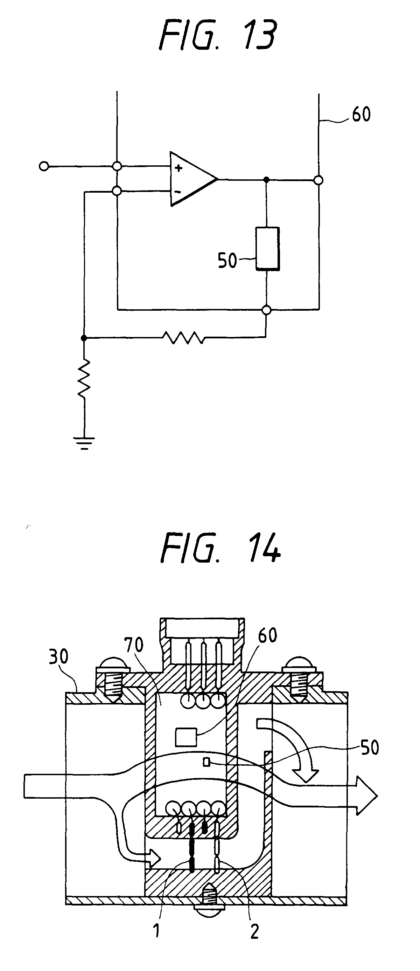

The embodiments shown by Figs. 10 and 11 comprise a variable resistor 50a having a temperature coefficient different from the other variable resistors 12a or 13a. In the embodiment shown in Fig. 12, a fixed resistor 50 having a temperature coefficient different from the other variable resistors 12a or 13a is provided between the negative input terminal of the differential amplifier 11 and earth potential. In the embodiment shown by Fig. 13, the resistor 50 having the temperature coefficient different from the other resistors is made by a monolithic resistor and formed in an IC. An air flowmeter made by this embodiment has a worse accuracy, but can be made less expensively. The IC and other elements are protected and the reliability of the air flowmeter is improved. By adopting such a structure, as shown in Fig. 14, an air flowmeter having a substrate in which the resistor having a temperature coefficient different from other resistors, or the IC including the resistor having the temperature coefficient different from other resistors, is provided which is wholly and directly exposed in the suction air flow so that the substrate is at substantially the same temperature as the suction air.

## Claims

1. Air flowmeter having a hot-wire type resistor (1) for detecting air flow rates, a thermistor (2) for detecting the temperature around said hot-wire type resistor (1), a drive circuit (102) for controlling the temperature of said hot wire type resistor (1) and for outputting electric signals indicative thereof and an output adjusting circuit (101) for adjusting said electric signals having a subtractor (14-18) receiving an output of an adjustable voltage reference means (19-21), wherein said output adjusting circuit (101) performs a zero point adjustment and a span adjustment for said outputted electric signals by using said subtractor (14-18) having an input terminal applied with said electric outputted signals through an adjustable non-inverting amplifier (11-13) and another input terminal applied with an output signal from said voltage reference means (19-21), wherein said voltage reference means (19-21) comprises a differential amplifier (21), in which an output signal thereof is fed back to a negative input of said differential amplifier (21), and has a composition such that a divided reference voltage is outputted to said another input terminal through said differential amplifier (21), and wherein said voltage reference means (19-21) is used for said zero point adjustment and said non-inverting amplifier (11-13) is used for said span adjustment for said outputted electric signals.

2. Air flowmeter according to claim 1, wherein said differential amplifier (21) is connected to a negative input of the subtractor (14-18) via a resistor (16).

3. Air flowmeter according to any preceding claim, wherein the non-inverting amplifier (11-13) inclues two resistors (12a, 13a, 50, 50a) of different temperature coefficients, one of which is connected between an output terminal and an input terminal of the non-inverting amplifier (11-13).

4. Air flowmeter according to claim 4, wherein at least one (50) of said two resistors is installed in an air path.

**Patentansprüche**

1. Luft-Durchflußsensor mit einem hitzdraht-artigen Widerstand (1) zum Erfassen von Luft-Durchflußraten, einem Heißleiter (2) zum Erfassen der Temperatur um den hitzdraht-artigen Widerstand (1), eine Ansteuerschaltung (102) zur Steuerung der Temperatur des hitzdraht-artigen Widerstands (1) und zur Ausgabe von elektrischen Signalen, die diese angeben, und einer Ausgangsanpassungsschaltung (101) zur Anpassung der elektrischen Signale mit einem Subtrahierer (14-18), der eine Ausgabe einer einstellbaren Referenzspannungsvorrichtung (19-21) empfängt, wobei die Ausgangsanpassungsschaltung (101) eine Nullpunktanpassung und eine Meßbereichanpassung für die ausgegebenen elektrischen Signale unter Verwendung des Subtrahierers (14-18) durchführt, dem an einem Eingang über einen einstellbaren nicht-invertierenden Verstärker (11-13) die, ausgegebenen elektrischen Signale und an einem zweiten Eingang ein Ausgangssignal der Referenzspannungsvorrichtung (19-21) zugeführt werden, wobei die Referenzspannungsvorrichtung (19-21) einen Differenzverstärker (21) aufweist, wobei ein Ausgangssignal des Differenzverstärkers (21) zu einem negativen Eingang des Differenzverstärkers (21) rückgekoppelt wird, und die einen derartigen Aufbau hat, daß eine geteilte Referenzspannung an den zweiten Eingang über den Differenzverstärker (21) ausgegeben wird, und wobei die Referenzspannungsvorrichtung (19-21) zur Nullpunktanpassung und der nicht-invertierende Verstärker (11-13) zur Meßbereichanpassung für die ausgegebenen elektrischen Signale verwendet wird.

2. Luft-Durchflußsensor nach Anspruch 1, wobei der Differenzverstärker (21) über einen Widerstand (16) mit einem negativen Eingang des Subtrahierers (14-18) verbunden ist.

3. Luft-Durchflußsensor nach einem der vorherigen Ansprüche, wobei der nicht-invertierende Verstärker (11-13) zwei Widerstände (12a, 13a, 50, 50a) mit unterschiedlichen Temperaturkoeffizienten aufweist, einer davon ist zwischen einem Ausgangsanschluß und einem Eingangsanschluß des nicht-invertierenden Verstärkers (11-13) angeschlossen.

4. Luft-Durchflußsensor nach Anspruch 4, wobei zumindest einer (50) der beiden Widerstände in einem Luftpfad angeordnet ist.

**Revendications**

1. Débitmètre d'air muni d'une résistance de type à fil chaud (1) pour détecter les débits d'air, d'une thermistance (2) pour détecter la température autour de ladite résistance de type à fil chaud (1), d'un circuit d'actionnement (102) pour commander la température de ladite résistance de type à fil chaud (1) et pour émettre des signaux électriques indicatifs de celle-ci et d'un circuit de réglage de sortie (101), pour régler lesdits signaux électriques, muni d'un soustracteur (14-18), recevant une sortie provenant d'un moyen de référence de tension réglable (19-21), dans lequel ledit circuit de réglage de sortie (101) réalise un réglage du point zéro et un réglage d'ouverture pour lesdits signaux électriques émis en utilisant ledit soustracteur (14-18) muni d'un terminal d'entrée adressé pour lesdits signaux électriques émis à travers un amplificateur non inverseur réglable (11-13) et d'un autre terminal d'entrée adressé pour le signal de sortie provenant dudit moyen de référence de tension (19-21), dans lequel ledit moyen de référence de tension (19-21) comprend un amplificateur différentiel (21), dans lequel un signal de sortie de celui-ci est réadressé à une entrée négative dudit amplificateur différentiel (21) et a une constitution telle qu'une tension de référence divisée est émise vers ledit terminal d'entrée à travers ledit amplificateur différentiel (21) et dans lequel ledit dispositif de référence de tension (19-21) est utilisé pour ledit réglage du point zéro et ledit amplificateur non inverseur (11-13) est utilisé pour ledit réglage d'ouverture pour lesdits signaux électriques émis.

2. Débitmètre d'air conformément à la revendication 1, dans lequel ledit amplificateur différentiel (21) est raccordé à une entrée négative du soustracteur (14-18) par le biais d'une résistance (16).

3. Débitmètre d'air selon l'une quelconque des revendications précédentes, dans lequel l'amplificateur non inverseur (11-13) comprend deux résistances (12a, 13a, 50, 50a) de différents coefficients de température, l'une d'elle étant raccordée à un terminal de sortie, d'un côté, et à un terminal d'entrée, de l'autre, d'un amplificateur non inverseur (11-13).

4. Débitmètre d'air conformément à la revendication 4, dans lequel au moins l'une (50) desdites deux résistances est installée dans un conduit d'air.

# FIG. 1

AIR FLOW

## FIG. 2

## FIG. 3

## *FIG. 4*

START

READ TARGET OUTPUTS
$V_{out1}$ AT $Q_1$
$V_{out2}$ AT $Q_2$

SET AIR FLOW RATE TO $Q_1$

MEASURE $V_0$    $V_0 \rightarrow V_{01}$

SET AIR FLOW RATE TO $Q_2$

MEASURE $V_0$    $V_0 \rightarrow V_{02}$

STOP MEASURED AIR FLOW

$$\frac{(V_{out1}-V_{out2})}{(V_{02}-V_{01})} \rightarrow Ra$$

$$\frac{(V_{01}V_{out2}-V_{02}V_{out1})}{(V_{02}-V_{01}) \cdot V_{ref}} \rightarrow Rb$$

$Ra = (R_{12}+R_{13})/R12$ ? — NO → ADJUST $R_{12}, R_{13}$

YES

$Rb = R_{20}/(R_{19}+R_{20})$ ? — NO → ADJUST $R_{19}, R_{20}$

YES

NEXT ? — YES

NO

END

# FIG. 5

# FIG. 6

# FIG. 7

FIG. 8

FIG. 9

## FIG. 10

## FIG. 11

## FIG. 12

## FIG. 13

## FIG. 14